(19) Europäisches Patentamt
European Patent Office
Office européen des brevets

(11) Publication number: 0 265 091 A1

# (12) EUROPEAN PATENT APPLICATION

(21) Application number: 87308546.8

(51) Int. Cl.4: C08F 4/42 , C08F 4/72

(22) Date of filing: 28.09.87

(30) Priority: 29.09.86 US 912117

(43) Date of publication of application: 27.04.88 Bulletin 88/17

(84) Designated Contracting States: AT BE CH DE ES FR GB GR IT LI LU NL SE

(71) Applicant: E.I. DU PONT DE NEMOURS AND COMPANY
1007 Market Street
Wilmington Delaware 19898(US)

(72) Inventor: Hertler, Walter Raymond
1375 Parkersville Road
Kennett Square Pennsylvania 19348(US)

(74) Representative: Jones, Alan John et al
CARPMAELS & RANSFORD 43 Bloomsbury Square
London, WC1A 2RA(GB)

(54) **Group transfer polymerization and initiators therefor.**

(57) Group Transfer Polymerization in the presence of aziridine-substituted initiators and/or monomers is disclosed.

EP 0 265 091 A1

## Groups Transfer Polymerization and Initiators Therefor

### BACKGROUND OF THE INVENTION

#### Field of the Invention

This invention relates to Group Transfer Polymerization and to selected aziridine-substituted compounds which are useful as initiators therein.

#### Background

United States Patents 4,414,372; 4,417,034; 4,508,880; 4,524,196; 4,581,428; 4,588,795; 4,605,716; 4,656,233; and 4,681,918, and EP-A-0 145 263, EP-A-0 188 539, and EP-A-87305069.4, referred to hereinafter as "the aforesaid patents and patent applications", disclose processes for polymerizing an acrylic or maleimide monomer to a "living" polymer in the presence of an initiator, which is a tetracoordinate organosilicon, organotin or organogermanium compound having at least one initiating site, and a co-catalyst which is a source of fluoride, bifluoride, cyanide or azide ions or a suitable Lewis acid, Lewis base or selected oxyanion. Such polymerization processes have become known in the art as Group Transfer Polymerization (Webster et al., J. Am. Chem. Soc., 105:5706 (1983)).

Preferred monomers for use in Group Transfer Polymerization are selected from acrylic and maleimide monomers of the formula $CH_2=C(Y)X$ and

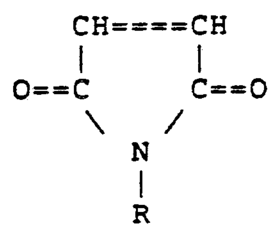

, and mixtures thereof, wherein:
X is - CN, $-CH=CHC(O)X'$ or $-C(O)X'$;
Y is -H, $-CH_3$, -CN or $-CO_2R$, provided, however, when X is $-CH=CHC(O)X'$, Y is -H or $-CH_3$;
X' is $-OSi(R^1)_3$, -R, -OR or NR'R";
each $R^1$, independently, is a hydrocarbyl radical which is an aliphatic, alicyclic, aromatic or mixed aliphatic-aromatic radical containing up to 20 carbon atoms or -H,
provided that at least one $R^1$ groups is not -H;
R is:

(a) a hydrocarbyl radical which is an aliphatic, alicyclic, aromatic or mixed aliphatic-aromatic radical containing up to 20 carbon atoms;

(b) a polymeric radical containing at least 20 carbon atoms;

(c) a radical of (a) or (b) containing one or more ether oxygen atoms within aliphatic segments thereof;

(d) a radical of (a), (b) or (c) containing one or more functional substitutents that are unreactive under polymerizing conditions; or

(e) a radical of (a), (b), (c) or (d) containing one or more reactive substituents of the formula $-Z'(O)C-C(Y^1)=CH_2$ wherein $Y^1$ is -H or $-CH_3$ and Z' is O or NR'; and each of R' and R" is independently selected from $C_{1-4}$ alkyl.

Preferred initiators are selected from tetracoordinate organosilicon, organotin and organogermanium compounds represented by the formulas $Z(Q')_3M$, $(Z^1)_2(Q')_2M$ and $[Z^1(Q')_2M]_2O$ wherein:
each Q', independently, is selected from $R^1$, $OR^1$, $SR^1$ and $N(R^1)_2$;
$R^1$ is as defined above for the monomer;
Z is an activating substituent selected from the group consisting of

-CN, 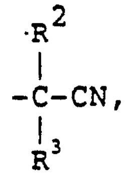, 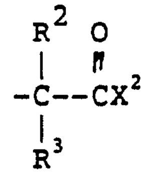,

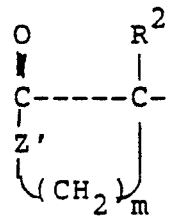, 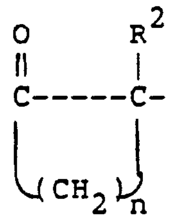,

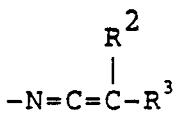, 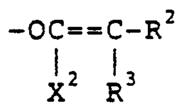, 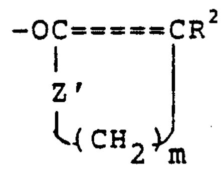,

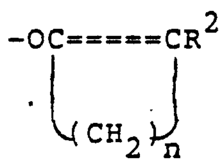, -SR', -OP(NR'R")$_2$, -OP(OR$^1$)$_2$,

-OP[OSi($R^1$)$_3$]$_2$ and mixtures thereof;

$X^2$ is -OSi($R^1$)$_3$, -$R^6$, -O$R^6$ or -NR'R";

R', R" and $R^1$ are as defined above for the monomer;

$R^6$ is

(a) a hydrocarbyl radical which is an aliphatic, alicyclic, aromatic or mixed aliphatic-aromatic radical containing up to 20 carbon atoms;

(b) a polymeric radical containing at least 20 carbon atoms;

(c) a radical of (a) or (b) containing one or more ether oxygen atoms within aliphatic segments thereof;

(d) a radical of (a), (b) or (c) containing one or more functional substituents that are unreactive under polymerizing conditions; or

(e) a radical of (a), (b), (c) or (d) containing one or more initiating sites; each of $R^2$ and $R^3$ is independently selected from -H, and hydrocarbyl and polymeric radicals, defined as for $R^6$ above;

Z' is as defined above for the monomer;

m is 2, 3 or 4;

n is 3, 4 or 5;

$Z^1$ is

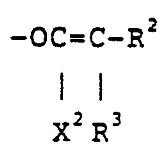

wherein $X^2$, $R^2$, and $R^3$ are as defined above;

$R^2$ and $R^3$ taken together are

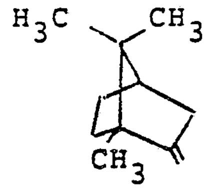

provided Z is

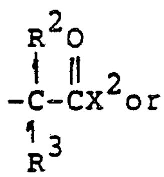 or 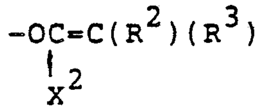 ;

$X^2$ and either $R^2$ or $R^3$ taken together are

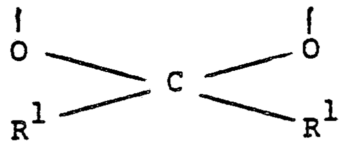

provided Z is

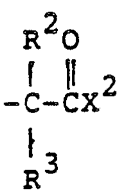 or 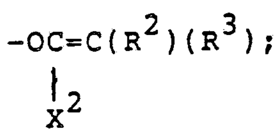 ; and

M is Si, Sn, or Ge, provided, however, when Z is

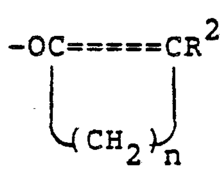 or 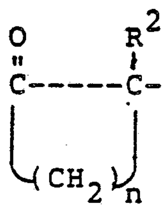 ,

M is Sn or Ge.

Preferred co-catalysts are selected from a source of bifluoride ions $HF_2^-$, or a source of fluoride, cyanide or azide ions, or a source of oxyanions, said oxyanions being capable of forming a conjugate acid having a pKa (DMSO) of about 5 to about 24, preferably about 6 to about 21, more preferably 8 to 18, or a suitable Lewis acid, for example, zinc chloride, bromide or iodide, boron trifluoride, an alkylaluminum oxide or an alkylaluminum chloride, or a suitable Lewis base, for example, a Lewis base of the formula selected from $(R^4)_3M'$ and

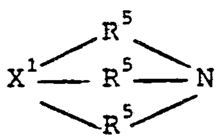

wherein
M′ is P or As;
$X^1$ is $-\overset{|}{N}-$ or

$$-\overset{|}{\underset{|}{C}}H,$$

provided, however, when the monomer is a nitrile, $X^1$ is

$$-\overset{|}{\underset{|}{C}}H;$$

each $R^4$, independently, is:

(a) a $C_{1-12}$ alkyl, $C_{4-12}$cycloalkyl, $C_{6-12}$aralkyl or di($C_{1-4}$ alkyl)amino group;

(b) a group of (a) wherein two or three of the alkyl, cycloalkyl and/or aralkyl groups are joined together by means of one or more carbon-carbon bonds;

(c) a group of (a) or (b) wherein the alkyl, cycloalkyl and/or aralkyl groups contain within aliphatic segments thereof one or more hetero atoms selected from O, N and S; or

(d) a group of (a), (b) or (c) wherein the alkyl, cycloalkyl and/or aralkyl groups contain one or more substituents that are unreactive under polymerizing conditions; and each $R^5$ is:
$-CH_2CH_2-$ or $-CH_2CH_2-$containing one or more alkyl or other substituents that are unreactive under polymerization conditions.

Additional details regarding Group Transfer Polymerization can be obtained from the aforesaid patents and patent applications, the disclosures of which are hereby incorporated by reference.

The present invention provides aziridine-substituted initiators which can be used in Group Transfer Polymerization and a Group Transfer Polymerization process wherein the initiator and/or acrylic monomer contain aziridine functions. There is no suggestion in any of the aforesaid patents that such or similar aziridine-substituted compounds would be useful as initiators or monomers in Group Transfer Polymerization.

## Summary of the Invention

The invention resides in a Group Transfer Polymerization process comprising contacting under polymerization conditions at least one monomer selected from acrylic and maleimide monomers with (i) a tetracoordinate organosilicon, organotin or organogermanium polymerization initiator having at least one initiating site and (ii) a co-catalyst which is a source of fluoride, bifluoride, cyanide or azide ions or a suitable Lewis acid, Lewis base or selected oxyanion, the process characterized in that at least one of the following conditions is met: (1) the initiator is a compound of the formula $Z^{1'}(Q')_3M$, $(Z^{1'})_2(Q')_2M$ or $[Z^{1'}(Q')_2M]_2O$ and (2) an acrylic monomer is present having the formula $CH_2=C(Y)CO_2X^3$ wherein the formulas:
$Z^{1'}$ is $(R^2)(R^3)C=C(OX^3)O-$;
each Q′, independently, is selected from $R^1$, $OR^1$, $SR^1$ and $N(R^1)_2$;
each $R^1$, independently, is a hydrocarbyl radical which is an aliphatic, alicyclic, aromatic or mixed aliphatic-aromatic radical containing up to 20 carbon atoms or H, provided that at least one $R^1$ group is not H;
M is Si, Ge or Sn;
each of $R^2$ and $R^3$ is independently selected from

(a) H;

(b) a hydrocarbyl radical which is an aliphatic, alicyclic, aromatic or mixed aliphatic-aromatic radical containing up to 20 carbon atoms;

(c) a polymeric radical containing at least 20 carbon atoms;

(d) a radical of (b) or (c) containing one or more ether oxygen atoms within aliphatic segments thereof;

(e) a radical of (b), (c) or (d) containing one or more functional substituents that are unreactive under polymerization conditions; or

(f) a radical of (b), (c), (d) or (e) containing one or more initiating sites;

$X^3$ is 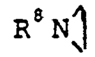,

$R^8$ is an alkylene radical having 2 to 10 carbon atoms; and
Y is -H, $-CH_3$, CN or $-CO_2R'$;
R′ is $C_{1-4}$ alkyl.

By initiating site is meant a group comprising the metal-containing moiety -MQ′ wherein Q′ and M are defined as above, derived from a Group Transfer Polymerization initiator, including the novel initiators employed in the present invention. In preferred embodiments, $R^1$ (in Q′) is methyl, M is Si, Q′ is $R^1$, $R^2$ is H or methyl, $R^3$ is H, methyl or diphenylhexyl, $R^8$(in $X^3$) is $-CH_2CH_2-$, and combinations thereof.

## DETAILED DESCRIPTION OF THE INVENTION

The present invention provides:

1) The Group Transfer Polymerization process described above.

2) Initiator (1) of the formula $Z^{1'}(Q')_3M$, $(Z^{1'})_2(Q')_2M$ or $[Z^{1'}(Q')_2M]_2O$ wherein $Z^{1'}$, M and Q′ are as defined above.

3) The "living" polymer consisting essentially of at least three repeat units of at least one acrylic or maleimide monomer containing one or more initiating sites comprising silicon, germanium or tin, said polymer further characterized by the presence of terminal and/or pendant aziridine groups.

Preferred "living" polymers of the invention are compositions having the formula $Q'MQ\bar{P}Z'''$, $R_p$-$[Z^4\bar{P}QMQ']_p$, $(Q')_2M[Q\bar{P}Z''']_2$ or $O[M(Q')_2Q\bar{P}Z''']_2$ wherein the formulas:

$Z'''$ is selected from the group consisting of -CN, $-C(R^2)(R^3)CN$, $-C(R^2)(R^3)C(O)X^2$, $-C(R^2)(R^3)CO_2X^3$, $-P(O)(NR'R'')_2$, $-P(O)(OR^1)_2$, $-P(O)[OSi(R^1)_3]_2$ and -SR′;

$Z^4$ is a diradical selected from the group consisting of $-Z'-(C(O)-C(R^2)(R^3)-$, $-C(R^2)(C(O)X^2$, $-C(R^2)(CO_2X^3)-$, $-C(R^2)(CN)-$and mixtures thereof;

Rp is a radical, of valence p, selected from

(a) a hydrocarbyl radical which is an aliphatic, alicyclic, aromatic or mixed aliphatic-aromatic radical containing up to 20 carbon atoms;

(b) a polymeric radical containing at least 20 carbon atoms;

(c) a radical of (a) or (b) containing one or more ether oxygen atoms within aliphatic segments thereof; and

(d) a radical of (a) (b) or (c) containing one or more functional substituents that are unreactive under polymerizing conditions ; $\bar{P}$ is a divalent polymeric radical consisting essentially of at least three repeat units of at least one acrylic or maleimide monomer;

Q is a divalent radical consisting essentially of one or both tautomeric forms of an acrylic or maleimide unit; and

p is an integer and is at least 1;

Z′ is O or NR′;

each of R′ and R″ is independently selected from $C_{1-4}$ alkyl; and

Q′, M, $R^1$, $R^2$, $R^3$, $X^2$ and $X^3$ are defined as above;

with the proviso that when $Z'''$ or $Z^4$ is devoid of an aziridine function ($X^3$), $\bar{P}$ includes repeat units of an aziridinyl-functional monomer.

4) Graft, star, or block polymer prepared from the "living" polymer described in (3) above.

Initiator (1) of the present invention can be prepared by the following processes. Initiator (1) wherein:

$R^2$ is H or methyl;

$R^3$ is $R^4-C(R^5)(R^7)-$;

$R^4$ is an alkyl radical of 1 to 9 carbon atoms;

$R^5$ is an aryl or alkaryl radical of 6 to 12 carbon atoms;

$R^7$ is H or $R^5$; and

all other symbols are defined as above for initiator 1, can be prepared by the process (1) comprising the steps of:

a) contacting a lithium compound of the formula, $R^3Li$, in a suitable solvent, with a (meth)acrylate of the formula, $CH_2=C(R^2)(CO_2X^3)$, to provide an intermediate olefin of the formula, $(R^2)(R^3)C=C(OX^3)(OLi)$, and

b) contacting the intermediate olefin with a compound of the formula $(Q')_3M-Cl$, $(Q')_2MCl_2$ or $[(Q')_2ClM]_2O$ to provide the initiator;

Q′, $X^3$ and M are defined as above for initiator (1);
$R^2$ and $R^3$ have the sub-generic meaning given above for Process (1).

Preferably M is Si; $R^1$ is methyl; $R^3$ is diphenylhexyl; and $R^8$ (in $X^3$) is $-CH_2CH_2-$.

Suitable solvents for use in process (1) may be selected from those disclosed in the aforesaid patents and patent applications for the preparation of "living" polymers by Group Transfer Polymerization. Tetrahydrofuran is preferred. The lithium compound $R^3$ Li can be prepared by contacting and reacting an olefin of the formula $R'^4CH=C(R^5)(R^6)$ wherein $R'^4$ is H or an alkyl group of 1 to 8 carbon atoms, and $R^5$ and $R^6$ are defined as above for process (1), dissolved in a suitable solvent, with a lithium alkyl such as n-butyllithium. Normally the lithium alkyl is added as a solution in a hydrocarbon solvent such as hexane. The lithium alkyl and olefin solutions are mixed together in approximately equimolar amounts at a temperature below ambient temperature, preferably about 0°C, and the mixture is then further cooled to below -40°, preferably below -70°C, to provide the compound $R^3Li$. An approximately equimolar amount of the aziridine-functional acrylate is then added to provide the above-formulated lithium enolate, which forms without raising the temperature. The compound $(R^1)_3M$-Y is added to a solution of lithium enolate at a temperature below -10°, preferably below -40°C, and the reaction mixture is warmed to about ambient temperature under an inert atmosphere such as argon or nitrogen, filtered and initiator is recovered by evaporating the filtrate.

Initiator (1) wherein:
$R^3$ is an activating substituent of a Group Transfer Polymerization initiator, other than -CN;
$R^2$ is H or methyl; and
all other symbols are defined as above for initiator 1, can be prepared by the process (2) comprising contacting and reacting a compound of silicon, germanium or tin of the formula $Z^1M(Q')_3$, $(Z^1)_2M(Q')_2$ or $[Z^1\text{-}(Q')_2M]_2O$, or a tautomer thereof, with at least one aziridinyl-function acrylate monomer of the formula, $CH_2=C(R^2)CO_2X^3$, wherein:
$Z^1$ is $(R^3)(R^2)C=C(X^2)O$;
$R^2$ and $R^3$ are defined as above for process (2);
$X^2$, $X^3$ and Q′ are defined as above.

Preferably M is Si, $R^1$ is $CH_3$, $R^3$ is $-OP(NR'R'')_2$ or $-OP(OR^1)_2$ where R′, R″ and $R^1$ are defined as above; Q′ is $R^1$; and $R^8$ (in $X^3$) is $-CH_2CH_2-$.

In process (2), the Si, Ge or Sn compound is mixed with an approximately equimolar amount of the aziridinyl-functional acrylate at a temperature of about 0° to about 100°C. Approximately ambient temperature is preferred when $R^2$ is -H, but temperatures above about 70°C are preferred when $R^2$ is $-CH_3$. The temperature rises as an exothermic reaction ensues. Reaction may be continued until analysis shows no residual monomer present. A solvent is unnecessary unless both components are solids or one component is insoluble in the other. Suitable solvents, if needed, may be selected from those cited in U.S. Patent 4,508,880, the relevant disclosure of which is incorporated herein by reference.

Initiator (1) can also be prepared by the process (3) comprising the steps of:

(a) contacting and reacting an aziridinyl ester of the formula $R^2R^3CHCO_2X^3$ with a strong base, such as lithium diisopropylamide, to form the anion $R^2R^3CCO_2X^{3-}$, and

(b) contacting and reacting the intermediate anion with a compound of the formula $(Q')_3M$-Cl, $(Q)_2MCl_2$ or $[(Q')_2ClM]_2O$ to provide the initiator, wherein: Q′, M and all other symbols are defined as above for initiator 1.

In process (3), preferably M is Si, $R^2$ is H or methyl, $R^3$ is methyl, Q′ is $R^1$ and $R^1$ is methyl.

Solvents and reaction conditions for process (3) are essentially those described above for process (2).

In the processes of preparing the aziridine-functional polymers of this invention, temperatures, operable solvents, catalysts and proportions of monomers, initiators and catalysts, and precautions against moisture are essentially as in the foregoing patents and applications. However, it is generally advantageous to polymerize aziridine-containing monomers at somewhat reduced temperatures to minimize side-reactions of the reactive aziridine group; temperatures of about -40° to about 10°C are preferred, most preferably, about -20° to about 0°C.

Preferred monomer for use in the present process is acrylic monomer selected from the group consisting of $CH_2=C(Y)X$ and $CH_2=C(Y)CO_2X^3$ wherein X, $X^3$ and Y are defined as above. Most preferably Y is H or $CH_3$, X is C(O)X′, X′ is -OR, and $R^8$ (in $X^3$) is $-CH_2CH_2-$.

The present invention also resides in the polymer prepared by the invention process.

By "living" polymer is meant a polymer of the invention which contains at least one terminal initiating site and is capable of polymerizing further in the presence of monomer(s) and catalysts.

"Living" polymers of the invention contain pendant and/or terminal aziridine groups. Preferred "living" polymers are those wherein $\overline{P}$ consists essentially of repeat units of the preferred monomers cited above. Preferred "living" polymers also include those wherein aziridine groups are present in terminal positions, those wherein Rp is a $C_{1-8}$ aliphatic hydrocarbyl radical and/or those wherein p is at least 2.

The polymers of the present invention include block and star-branched polymers prepared by methods similar to those described in the aforesaid patents and patent applications. Solutions or dispersions of the "living" polymers of the present invention in aprotic solvents are useful for casting films and fibers and may be formulated into specialty coating compositions for a variety of substrates. The "living" polymers may also be capped or quenched as descibed for related "living" polymers in the Group Transfer Polymerization art, and the capped or quenched products may be molded into shaped articles, including films and fibers. Polymers containing functional substituents introduced via monomer, initiator and/or capping agent can be post-reacted to provide cross-linked structures, block copolymers and the like.

As is already apparent from the above discussion, the reaction conditions, including temperatures, solvents, concentration and preferred monomers and catalysts (co-catalysts), are those described in the aforesaid patents and patent applications. As indicated above, polymers of the invention having terminal and/or pendant aziridine groups are useful for preparing graft, star and linear block polymers by reaction of the aziridine groups with carboxyl-containing oligomers and polymers. By "terminal" is means at or close to the end of a polymer chain or branch. For preparing graft copolymers, it is generally advantageous if the molecular weight of the aziridine polymer is relatively low, as grafting efficiency is improved at lower molecular weights; $\overline{M}_w$ of less than 10,000, preferably below 5000, is suitable. Grafting reactions are carried out by heating the polymers at a temperature of about 25° to about 160°C, preferably about 80° to about 130°C in a suitable solvent such as toluene. Refluxing toluene (110°C) is a convenient reaction medium.

Block and star copolymers can be prepared by heating polymers of the invention containing terminal pendant aziridine groups in a suitable solvent in a temperature range of about 25° to about 160°C, preferably about 50° to about 130°C, with oligomers or polymers containing terminal carboxyl groups. Aziridine-functional polymers may also be reacted with non-polymeric carboxyl-containing compounds for the purpose of modifying polymer properties.

Polymers of the invention having pendant (as opposed to terminal) aziridine groups are useful agents for grafting or cross-linking polymers containing carboxyl groups or groups which may provide carboxyl, such as anhydride groups (Example 16). Polymers with pendant aziridine functions may themselves be cross-linked by reaction with compounds containing carboxyl groups.

In the following examples of the invention, molecular weight of the polymer products ($\overline{M}_w$, $\overline{M}_n$) was measured by gel permeation chromatography (GPC). The polydispersity of the polymer is defined by $D = \overline{M}_w / \overline{M}_n$. Unless otherwise specified, by "living" polymer products were quenched by exposure to moist air or methanol before molecular weights were determined. Parts and percentages are by weight and temperatures are in degrees Celsius unless otherwise specified.

Example 1

Preparation of Copolymer of Methyl Methacrylate (MMA) and 2(N-Aziridinyl)ethyl Methacrylate in a Feed Process

To a stirred mixture of 20 mL toluene, 0.4 mL (2 mmol of [(1-methoxy-2-methyl-1-propenyl)oxy]-trimethylsilane ("MTS") and 20 µL of 1M tris(dimethylamino)sulfonium bifluoride ($TASHF_2$) in acetonitrile was added of 6.5 mL (60 mmol) MMA. After 3 mL of MMA had been added, concomitant addition of 6.4 mL (40 mmol) of 2(N-aziridinyl)ethyl methacrylate was begun. The additions of both monomers were complete at about the same time. An exothermic reaction persisted throughout monomer addition. The rate of addition was such that the temperatures remained below 60°. After stirring for an additional 30 minutes, 6 mL methanol was added and the resulting solution was evaporated in vacuo to 13.2 g of solid polymer. Nmr analysis showed that no monomer remained.

GPC: $\overline{M}_n$ 3030, $\overline{M}_w$ 4880, D = 1.61 (theory 6000).

The 2(N-aziridinyl)ethyl methacrylate used in this Example was purified by distillation over calcium hydride after stirring 2 hours with calcium hydride.

Example 2

Preparation of Copolymer of MMA and 2(N-Aziridinyl)ethyl Methacrylate in a Batch Process

A mixture of 70 mL tetrahydrofuran (THF), 0.4 mL (2 mmol) MTS, 6.5 mL (60 mmol) MMA, and 6.4 mL (40 mmol) 2(n-aziridinyl)ethyl methacrylate (distilled over calcium hydride) was cooled to -20°. Then 10 µL of 1M $TASHF_2$/MeCN was added, and a prompt exothermic reaction caused a temperature rise to +16°. The reaction mixture was cooled to 3° and allowed to warm to 20°. Then 3 mL methanol and 0.1 mL 1M $Bu_4NF$/THF was added and the resulting solution was evaporated in vacuo to 10.3 g of solid polymer. Nmr analysis showed no residual monomer.

GPC: $\bar{M}_n$ 3760, $\bar{M}_w$ 4830, D = 1.29 (theory 6000).

Example 3

Preparation of Copolymer of MMA, Lauryl Methacrylate, and 2(N-Aziridinyl)ethyl Methacrylate

Monomer feeds were prepared having the following compositions:
Monomer feed A = 5.4 mL MMA + 10.2 g lauryl methacrylate
Monomer feed B = 1.55 g of distilled 2(N-aziridinylethyl)methacrylate
To a stirred mixture of 15 mg $TASHF_2$, 0.7 mL (3.5 mmol) MTS, 19 mL of THF, and 1 mL of acetonitrile at 0° was added 0.6 mL of monomer feed A. Then one-third of monomer feed B was added. Then, simultaneously, all of remaining monomer feed A and one-third of monomer feed B were added. Finally, the last one-third of monomer feed B was added. The resulting solution was warmed to ambient temperature and stirred 30 minutes. Then 1 mL methanol was added, and one-half of the resulting solution was evaporated to 8.6 g of solid polymer.

GPC: $\bar{M}_n$ 7730, $\bar{M}_w$ 9580, D = 1.24 (theory 4800).

Example 4

Preparation of Aziridine-Containing Silyl Ketene Acetal Initiator

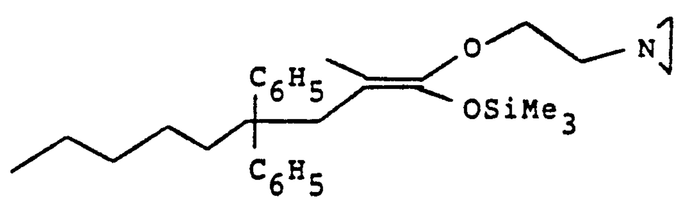

To a solution of 1.8 g (1.76 mL, 10 mmol) of 1,1-diphenylethylene in 15 mL THF at 0° was added 10 mmol of n-butyl lithium/hexane. The resulting solution was cooled to -78° and treated with 1.55 g (1.6 mL, 10 mmol) 2(N-aziridinyl)ethyl methacrylate. Then, still at -78°, 1.08 g (1.27 mL, 10 mmol) of chlorotrimethylsilane was added. The resulting mixture was warmed to ambient temperature, filtered under argon, and the resulting filtrate was evaporated. The resulting residue was treated with hexane and filtered. The filtrate was evaporated to 1.97 g of liquid initiator product.

Anal. Calcd. for $C_{29}H_{43}NSiO_2$: C, 74.78; H, 9.31; N, 3.01; Si, 6.03
Found: C, 75.58; H, 9.49; N, 3.13; Si, 6.19

Example 5

Preparation of Aziridine-containing Silyl Ketene Acetal Initiator

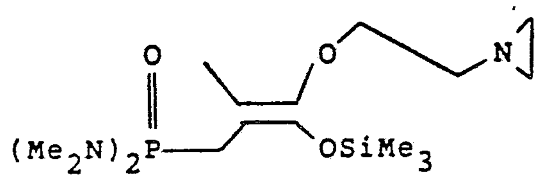

To 4.16 g (20 mmol) of bis(dimethylamino)trimethylsiloxy phosphine at 80° was added 3.1 g (3.2 mL, 20 mmol) of 2(N-aziridinyl)ethyl methacrylate causing a temperature rise to 85°. After stirring 1.5 hours at 80°, nmr analysis of the resulting mixture showed no residual methacrylate.

Anal. Calcd. for $C_{15}H_{34}PO_3Si$: C 49.56; H 9.43; N 11.56; P 8.52; Si 7.73.

Found: C 49.04; H 9.81; N 11.83; P 8.69; Si 7.78.

## Example 6

Preparation of Aziridine-ended PMMA

To a solution of 6 g (16.5 mmol) of an initiator prepared according to a method similar to that described in Example 5, and 20 µL of 1M $TASHF_2$/acetonitrile in 75 mL of THF was added 35.6 mL (330 mmol) of MMA which had been purified by passage over a short column of neutral alumina under argon. When the resulting exothermic polymerization was finished, 10 mL of methanol was added, and the resulting solution was evaporated under reduced pressure. The resulting residue was precipitated from THF with hexane to give aziridine-terminated PMMA with $\overline{M}_n$ 5570, $\overline{M}_w$ 7430, D = 1.33 (theory 2360).

## Example 7

Preparation of Aziridine-ended PMMA

To a solution of 0.9 g (2 mmol) of the initiator prepared according to a method similar to that described in Example 4 and 30 µL of 1M $TASHF_2$/acetonitrile in 50 mL of THF was added 16.2 mL (150 mmol) of MMA. When the addition of the MMA was complete, 200 µL of 0.01M $TASHF_2$/acetonitrile was added producing a small additional exotherm. Evaporation gave 17.6 g of solid aziridine-terminal PMMA with $\overline{M}_n$ 6710, $\overline{M}_w$ 10,200, D = 1.52 (theory 7900).

## Example 8

Preparation of Graft of Aziridine-ended PMMA on Random Copolymer of Ethylene, Methyl Acrylate, and Monoethyl Ester of Maleic Acid

To a refluxing solution of 15 g of a random copolymer of 42% ethylene, 54% methyl acrylate, 4% maleic acid monoethyl ester commercially available from E. I. du Pont de Nemours & Co. under the registered trademark Vamac® Ethylene/Acrylic Elastomer in 200 mL of toluene and 80 mL of n-butanol was added 9 g of the aziridine-ended PMMA prepared in Example 6. After refluxing for 18 hours, evaporation gave 24 g of solid polymer, $\overline{M}_n$ 27,200, $\overline{M}_w$ 142,000, D = 5.21. A dumbell was molded and compared to a molded dumbell control consisting of a blend of 7.5 g of Vamac® and 4.5 g of PMMA ($\overline{M}_n$ 4290, $\overline{M}_w$ 5510). The properties of the graft copolymer tensile bar are compared to those of the blend in the following table.

| Sample | (MPa/psi) Tb | M(100) | M(200) | M(300) | Eb (%) | P.S.* |
|---|---|---|---|---|---|---|
| graft | 67.7/995 | 32.3/47 | 51.8/762 | 65.3/960 | 318 | 11% |
| blend | 6.4/95 | 4.4/65 | 3.5/52 | 2.6/38 | 900 | 209% |

*Permanent set at Eb.

A similar graft copolymer was prepared under the same conditions using Vamac® and aziridine-ended PMMA prepared in Example 7. A 7.8 mil film cast from THF had the following tensile properties: tensile strength 2938 psi, modulus 219,488 psi, elongation at break 387%.

Example 9

Condensation of PMMA-COOH and Aziridine-Ended PMMA

A solution of 0.72 g of PMMA with a terminal COOH group ( $\overline{M}_n$ 7210, $\overline{M}_w$ 8040) and 0.67 g aziridine-ended PMMA ( $\overline{M}_n$ 6710, $\overline{M}_w$ 10,200) prepared according to the method described in Example 7 in 10 mL of toluene was stirred at reflux 18 hours and evaporated. The resulting polymer had $\overline{M}_n$ 10,900, $\overline{M}_w$ 13,800, D = 1.26 (theory for complete coupling, 13,900). The observed $\overline{M}_n$ indicates about 57% of the polymer chains were coupled.

Example 10

Graft of Aziridine-ended PMMA with Copolymer of Ethylene and 8.7% Methacrylic Acid

A solution of 0.5 g of polyethylene containing 8.7% methacrylic acid units (melt index 10, $\overline{M}_n$ 10,000) and 1.58 g of PMMA containing a terminal aziridine group ( $\overline{M}_n$ 3150, $\overline{M}_w$ 3760, D = 1.19) prepared by the procedure of Example 6 in 50 mL of toluene and 21 mL of n-butanol was stirred at reflux for 18 hrs. Then the clear solution was added to 250 mL of cold acetone. Slight cloudiness resulted, but no precipitate formed. The solution was filtered and evaporated to 1.6 g of graft copolymer. In a control experiment, a similar solution of the ethylene-methacrylic acid copolymer when added to cold acetone gave a precipitate of the total amount of polymer. Thus the PMMA-graft drastically changed the solubility characteristics of the polyethylene.

Example 11

Condensation of PMMA-COOH and Aziridine-ended PMMA

A solution of 1 g of PMMA containing a terminal carboxylic acid group ( $\overline{M}_n$ 2460, $\overline{M}_w$ 2780, D = 1.13) and 1.28 g of PMMA with an aziridine end group ( $\overline{M}_n$ 3150, $\overline{M}_w$ 3760, D = 1.19) was prepared by a method similar to that described in Example 8 in 8 mL of toluene. The solution was stirred at reflux for 18 hours. Evaporation gave PMMA with $\overline{M}_n$ 5140, $\overline{M}_w$ 6950, D = 1.35 (theory for quantitive coupling of the two polymers = 5610). The molecular weight increase is consistent with efficient coupling of the two polymers.

Example 12

Preparation of Poly(2-trimethylsiloxyethyl methacrylate) with an Aziridinyl End Group

To a stirred solution of 1.82 g (5 mmol) of the initiator prepared as in Example 5 and 20 µL of 1M $TASHF_2$/acetonitrile was added 17.2 g (17.6 mL, 85 mmol) of 2-trimethylsiloxyethyl methacrylate. Thirty minutes after the end of the exothermic polymerization, a sample removed for analysis showed no residual monomer (nmr), and the polymer has $\overline{M}_n$ 4930, $\overline{M}_w$ 5760, D = 1.17 (theory.3800). After adding 3 mL of methanol, the solution was evaporated to 18.65 g of aziridine-terminal poly(2-trimethylsiloxyethyl methacrylate) as a viscous liquid.

Example 13

Condensation of Agaricic Acid with Aziridine-ended Poly(2-trimethylsiloxyethyl methacrylate)

A solution of 1.5 g of the polymer of Example 12 and 42 mg (0.101 mmol) of agaricic acid in 20 mL of toluene was stirred at reflux for 18 hours. Evaporation of a sample of the solution gave a fluffy solid polymer, $\overline{M}_n$ 9050, $\overline{M}_w$ 16,500, D = 1.82 (theory for coupling of 3 equivalents of aziridine-ended polymer with agaricic acid = 15,200). The molecular weight data indicates that between 2 and 3 equivalents of polymer condensed with the tricarboxylic acid. The reaction mixture was treated with 20 mL of methanol and 0.1 mL of 1 M tetrabutylammonium fluoride/THF and refluxed 1 hour. On cooling, partial precipitation of the product occurred. Evaporation gave the grafted poly(2-hydroxyethyl methacrylate). Addition of a small amount of the product to mixtures of water and toluene, hexane and methanol, or cyclohexane and water gave fairly stable emulsions.

Example 14

Preparation of Block Copolymer of MMA and 2(N-Aziridinyl)ethyl Methacrylate

To a solution of 0.4 mL (2 mmol) of MTS and 20 µL of 1M $TASHF_2$/acetonitrile in 70 mL of THF was added at 0° to 5° 6.5 mL (6 g, 60 mmol) of MMA. Then at 0° to 5° was added 6.42 mL (6.2 g, 40 mmol) of 2(N-aziridinyl)ethyl methacrylate. After stirring 30 minutes at ambient temperature, 3 mL of methanol and 0.1 mL of 1M tetrabutylammonium fluoride/THF was added, and the solution was evaporated to 13.3 g of block copoly(MMA/aziridinylethyl methacrylate), $\overline{M}_n$3050, $\overline{M}_w$ 3620, D = 1.19 (theory 6000). Nmr analysis showed no residual monomer.

Example 15

Preparation of Multiblock Comb Polymer

Carboxylic acid-ended block copolymer of ethyl acrylate and MMA was prepared as follows. To a solution of 0.58 g (0.66 mL, 2.4 mmol) of 1,1-bis(trimethylsiloxy)-2,2-dimethylethylene and 30 µL of 1M $TASHF_2$/acetonitrile in 40 mL of THF was added 10.8 mL (100 mmol) of MMA (a sample removed for GPC analysis showed $\overline{M}_n$ 4560, $\overline{M}_w$6530, D = 1.43). After 30 minutes, 10.8 mL (100 mmol) of ethyl acrylate was added along with 20 µL of 1M $TASHF_2$/acetonitrile. Then after 30 minutes, 6 mL of methanol was added, and the solution was heated at reflux for 1 hour and evaporated to 14.5 g of solid polymer with a terminal carboxylic acid group. Nmr showed that the block copolymer consisted of 77% MMA units and 23% of ethyl acrylate units, $\overline{M}_n$ 3660, $\overline{M}_w$ 10,500, D = 2.87./

A solution of 5.3 g of the carboxylic acid-terminated copoly(MMA/EA) ( $\overline{M}_N$ 3660) and 1 g of the block copolymer of 60 mole % MMA and 40 mole % 2(N-aziridinyl)ethyl methacrylate ( $\overline{M}_n$ 3050, AZEMA)) prepared in Example 14, in 20 mL of toluene was stirred at reflux for 18 hours. The comb polymer which was isolated upon evaporation had $\overline{M}_n$ 24,200, $\overline{M}_w$62,500, D = 2.58, Tg 16' (DSC). The molecular weight data suggest that, on average, there are 5 MMA/EA tines on the AZEMA blocks of MMA-AZEMA with about 20% uncoupled low molecular weight polymer remaining as evidenced by a shoulder in the GPC trace.

Example 16

Cross-linking of MMA/Methacrylic Copolymer

A 20% solution (3 g) of methylmethacrylate/methacrylic acid (90/10) copolymer, $\bar{M}_w$ about 11,000, in 2-ethoxyethanol was mixed with a 20% solution (1.1 g), in the same solvent, of methyl methacrylate/2(N-aziridinyl)ethyl methacrylate (50.8/49.2) copolymer, $\bar{M}_w$ 4980, made by group transfer polymerization. On mixing, viscosity increased and a haze formed. The mixing was drawn down on a 4 x 6 x 1/8 in. (10.2 x 15.2 x 0.3 cm) glass panel with a 5.1 cm, 20 mil doctor blade, and let stand at room temperature. After 30 min, the coating was insoluble in acetone, indicating that it was crosslinked.

The experiment was repeated in the same fashion, except that methyl ethyl ketone was used as the solvent instead of 2-ethoxyethanol. The same results were obtained.

The crosslink obtained by this chemistry is an amino ester. Substitution of a maleic anhydride copolymer for the methacrylic acid copolymer leads to amide ester crosslinks.

## Claims

1. In a Group Transfer Polymerization process comprising contacting under polymerizing conditions at least one monomer selected from acrylic and maleimide monomers with (i) a tetracoordinate organosilicon, organotin or organogermanium polymerization initiator having at least one initiating site and (ii) a co-catalyst which is a source of fluoride, bifluoride, cyanide or azide ions or a suitable Lewis acid, Lewis base of selected oxyanion, the process characterized in that at least one of the following conditions is met: (1) the initiator is a compound of the formula $Z^{1'}(Q')_3M$, $(Z^{1'})_2(Q')_2M$ or $[Z^{1'}(Q')_2M]_2O$ and (2) an acrylic monomer is present having the formula $CH_2=C(Y)CO_2X^3$ wherein the formulas:
$Z^{1'}$ is $(R^2)(R^3)C=C(OX^3)O$-;
each Q', independently, is selected from $R^1$, $OR^1$, $SR^1$ and $N(R^1)_2$;
each $R^1$, independently, is a hydrocarbyl radical which is an aliphatic, alicyclic, aromatic or mixed aliphatic-aromatic radical containing up to 20 carbon atoms or H, provided that at least one $R^1$ group is not H;
M is Si, Ge or Sn;
each of $R^2$ and $R^3$ is independently selected from
(a) H;
(b) a hydrocarbyl radical which is an aliphatic, alicyclic, aromatic or mixed aliphatic-aromatic radical containing up to 20 carbon atoms;
(c) a polymeric radical containing at least 20 carbon atoms;
(d) a radical of (b) or (c) containing one or more ether oxygen atoms within aliphatic segments thereof;
(e) a radical of (b), (c) or (d) containing one or more functional substituents that are unreactive under polymerizing conditions; or
(f) a radical of (b), (c), (d) or (e) containing one or more initiating sites;

$X^3$ is 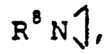,

$R^8$ is an alkylene radical having 2 to 10 carbon atoms;
Y is -H, $-CH_3$, -CN or $-CO_2R'$; and
R' is $C_{1-4}$ alkyl.

2. Process of Claim 1 wherein the product is a "living" polymer.

3. Process of Claim 1 or Claim 2 wherein the initiator is a compound of the formula $Z^{1'}(Q')_3M$, $(Z^{1'})_2(Q')_2M$ or $[Z^{1'}(Q')_2M]_2O$.

4. Process of Claim 3 wherein M is Si.

5. Process of Claim claim 3 or 4 wherein $(Q')_3$ and $(Q')_2$ are $(R^1)_3$ and $(R^1)_2$ respectively.

6. Process of Claim 3, 4, or 5 wherein a hydrocarbyl radical in $R^2$ or $R^3$ contains one or more functional substituents that are unreactive under polymerizing conditions.

7. Process of any one of Claim 3 to 6 wherein a hydrocarbyl radical in $R^2$ or $R^3$ contains one or more initiating sites.

8. Process of Claim 6 wherein a hydrocarbyl radical in $R^2$ or $R^3$ contains one or more initiating sites.

9. Process of any one of Claims 3 to 8 wherein $R^2$ is H or methyl.

10. Process of any one of Claims 3 to 9 wherein $R^3$ is H, methyl of diphenylhexyl.

11. Process of any one of Claims 5 to 10 wherein $R^1$ is methyl.

12. Process of any one of Claims 1 to 11 wherein $R^8$ (in $X^3$) is $-CH_2CH_2-$.

13. Process of any one of Claims 1 to 12 wherein the monomer is acrylic monomer selected from the group consisting of $CH_2=C(Y)X$ and $CH_2=C(Y)CO_2X^3$ wherein:
X is -CN, -CH=CHC(O)X' or -C(O)X';
Y is -H, $-CH_3$, -CN or $-CO_2R'$, provided, however, when X is -CH=CHC(O)X', Y is -H or $-CH_3$;
X' is $-OSi(R^1)_3$, -R, -OR or -NR'R"; R' and R" are independently selected from $C_{1-4}$ alkyl; and
R is:

(a) a hydrocarbyl radical which is an aliphatic, alicyclic, aromatic or mixed aliphatic-aromatic radical containing up to 20 carbon atoms;

(b) a polymeric radical containing at least 20 carbon atoms;

(c) a radical of (a) or (b) containing one or more ether oxygen atoms within aliphatic segments thereof;

(d) a radical of (a), (b) or (c) containing one or more functional substituents that are unreactive under polymerizing conditions; or

(e) a radical of (a), (b), (c) or (d) containing one or more reactive substituents of the formula $-Z'(O)C-C(Y^1)=CH_2$ wherein $Y^1$ is -H or $-CH_3$ and Z' is O or NR';

14. Process of Claim 13 wherein Y is H or $CH_3$.

15. Process of Claim 13 or Claim 14 wherein $R^8$ (in $X^3$) is $-CH_2CH_2-$.

16. Process of Claim 13 or Claim 14 wherein X is C(O)X',.

17. Process of Claim 16 wherein X' is -OR.

18. Process of Claim 3 wherein the monomer is acrylic monomer selected from the group consisting of $CH_2=C(Y)X$ and $CH_2=C(Y)CO_2X^3$ wherein:
X is -CN, -CH=CHC(O)X' or -C(O)X';
Y is -H, $-CH_3$, -CN or $-CO_2R'$, provided, however, when X is -CH=CHC(O)X', Y is -H or $-CH_3$;
X' is $-OSi(R^1)_3$, -R, -OR or -NR'R"; R' and R" are independently selected from $C_{1-4}$ alkyl; and
R is:

(a) a hydrocarbyl radical which is an aliphatic, alicyclic, aromatic or mixed aliphatic-aromatic radical containing up to 20 carbon atoms;

(b) a polymeric radical containing at least 20 carbon atoms;

(c) a radical of (a) or (b) containing one or more ether oxygen atoms within aliphatic segments thereof;

(d) a radical of (a), (b) or (c) containing one or more functional substituents that are unreactive under polymerizing conditions; or

(e) a radical of (a), (b), (c) or (d) containing one or more reactive substituents of the formula $-Z'(O)C-C(Y^1)=CH_2$ wherein $Y^1$ is -H or $-CH_3$ and Z' is O or NR';

19. Process of Claim 18 wherein Y is H or $CH_3$.

20. Process of Claim 19 wherein X is -C(O)X'.

21. Process of Claim 20 wherein X' is -OR.

22. "Living" polymer prepared by the process of any one of Claims 1 to 21.

23. "Living" polymer consisting essentially of at least three repeat units of at least one acrylic or maleimide monomer containing one or more initiating sites comprising silicon, germanium or tin, said polymer further characterized by the presence of terminal and/or pendant aziridine groups.

24. "Living" polymer of the formula $Q'MQ\overline{P}Z'''$, $R_p[Z^4\overline{P}QMQ']_p$, $(Q')_2M[Q\overline{P}Z''']_2$ or $O[M(Q')_2Q\overline{P}Z''']_2$ wherein the formulas:
Q is a divalent radical consisting essentially of one or both tautomeric forms of an acrylic or maleimide unit;
each Q', independently, is selected from $R^1$, $OR^1$, $SR^1$ and $N(R^1)_2$;
each $R^1$, independently, is a hydrocarbyl radical which is an aliphatic, alicyclic, aromatic or mixed aliphatic-aromatic radical containing up to 20 carbon atoms or H, provided that at least one $R^1$ group is not H;
M is Si, Ge or Sn;
Z''' is selected from the group consisting of -CN, $-C(R^2)(R^3)CN$, $-C(R^2)(R^3)C(O)X^2$, $-C(R^2)(R^3)CO_2X^3$, $-P(O)-(NR'R")_2$, $-P(O)(OR^1)_2$, $-P(O)]OSi(R^1)_3]_2$ and -SR';
$Z^4$ is a diradical selected from the group consisting of $-Z'-C(O)-C(R^2)(R^3)-$, $-C(R^2)(C(O)X^2$, $-C(R^2)(CO_2X^3)-$, $-C-(R^2)(CN)-$and mixtures thereof;
each of $R^2$ and $R^3$ is independently selected from (a) H;
(b) a hydrocarbyl radical which is an aliphatic, alicyclic, aromatic or mixed aliphatic-aromatic radical containing up to 20 carbon atoms;
(c) a polymeric radical containing at least 20 carbon atoms;
(d) a radical of (b) or (c) containing one or more ether oxygen atoms within aliphatic segments thereof;

(e) a radical of (b), (c) or (d) containing one or more functional substituents that are unreactive under polymerizing conditions; or
(f) a radical of (b), (c), (d) or (e) containing one or more initiating sites;
$X^2$ is $-OSi(R^1)_3$, $-R^6$, $-OR^6$ or $-NR'R''$;
$R^6$ is;
(a) a hydrocarbyl radical which is an aliphatic, alicyclic, aromatic or mixed aliphatic-aromatic radical containing up to 20 carbon atoms;
(b) a polymeric radical containing at least 20 carbon atoms;
(c) a radical of (a) or (b) containing one or more ether oxygen atoms within aliphatic segments thereof;
(d) a radical of (a), (b) or (c) containing one or more functional substituents that are unreactive under polymerizing conditions; or
(e) a radical of (a), (b), (c) or (d) containing one or more initiating sites;
Z' is O or NR';
each of R' and R'' is independently selected from $C_{1-4}$ alkyl;

$X^3$ is $R^8$N],

wherein $R^8$ is an alkylene radical having 2 to 10 carbon atoms;
Rp is a radical, of valence p, selected from
(a) a hydrocarbyl radical which is an aliphatic, alicyclic, aromatic or mixed aliphatic-aromatic radical containing up to 20 carbon atoms;
(b) a polymeric radical containing at least 20 carbon atoms;
(c) a radical of (a) or (b) containing one or more ether oxygen atoms within aliphatic segments thereof; and
(d) a radical of (a), (b) or (c) containing one or more functional substituents that are unreactive under polymerizing conditions ;
p is an integer and is at least 1;
$\overline{P}$ is a divalent polymeric radical consisting essentially of at least three repeat units of at least one acrylic or maleimide monomer;p is an integer and is at least 1; and
with the proviso that when $Z'''$ or $Z^4$ is devoid of an aziridine function ($X^3$), $\overline{P}$ includes repeat units of an aziridinyl-functional monomer.

25. Polymer of Claim 24 wherein M is Si.

26. Polymer of Claim 24 or Claim 25 wherein $(Q')_3$ and $(Q')_2$ are $(R^1)_3$ and $(R^1)_2$, respectively.

27. Polymer of Claim 26 wherein $R^1$ is methyl.

28. Polymer of any one of Claims 24 to 27 wherein $R^2$ is H or methyl.

29. Polymer of any one of Claims 24 to 28 wherein $R^3$ is H, methyl or diphenylhexyl.

30. Polymer of any one of Claims 24 to 29 wherein $R^8$ (in $X^3$) is $-CH_2CH_2-$.

31. Polymer of any one of Claims 24 to 30 of the formula $Q'MQ\,\overline{P}\,Z'''$ or $R_p[Z^4\,\overline{P}\,QMQ']_p$.

32. Polymer of any one of Claims 24 to 31 dissolved or dispersed in an aprotic solvent to produce a solution or dispersion.

33. Film prepared from the solution or dispersion of Claim 32.

34. Coated substrate prepared from the solution or dispersion of Claim 32.

35. Fiber prepared from the solution or dispersion of Claim 32.

36. Polymer of any one of Claims 24 to 32 wherein the "living" ends are capped.

37. Polymer of Claim 36 wherein the capping agent contains at least one functional substituent that is unreactive under capping conditions.

38. Polymer of Claim 37 wherein the capping agent contains more than one capping site.

39. Process of preparing a block polymer from the "living" polymer of any one of Claims 24 to 31.

40. Polymer of the process of Claim 39.

41. Process comprising quenching the polymer of any one of Claims 24 to 31 with an active hydrogen source.

42. Product of the process of Claim 41.

43. Molded article prepared from the polymer of Claim 42.

44. Photosensitive article prepared from the polymer of Claim 42.

45. Compound of the formula $Z^{1'}(Q')_3M$, $(Z^{1'})_2(Q')_2M$ or $[Z^{1'}(Q')_2M]_2O$ wherein the formulas:
$Z^{1'}$ is $(R^2)(R^3)C=C(OX^3)O-$;
each Q', independently, is selected from $R^1$, $OR^1$, $SR^1$ and $N(R^1)_2$;

each $R^1$, independently, is a hydrocarbyl radical which is an aliphatic, alicyclic, aromatic or mixed aliphatic-aromatic radical containing up to 20 carbon atoms or H, provided that at least one $R^1$ group is not H;
M is Si, Ge or Sn;
each of $R^2$ and $R^3$ is independently selected from (a) H;
(b) a hydrocarbyl radical which is an aliphatic, alicyclic, aromatic or mixed aliphatic-aromatic radical containing up to 20 carbon atoms;
(c) a polymeric radical containing at least 20 carbon atoms;
(d) a radical of (b) or (c) containing one or more ether oxygen atoms within aliphatic segments thereof;
(e) a radical of (b), (c) or (d) containing one or more functional substituents that are unreactive under polymerizing conditions; or
(f) a radical of (b), (c), (d) or (e) containing one or more initiating sites;

$$X^3 \text{ is } R^8N\rceil,$$

$R^8$ is an alkylene radical having 2 to 10 carbon atoms.

46. Compound of Claim 45 wherein M is Si.
47. Compound of Claim 45 or Claim 46 wherein $(Q')_3$ is $(R^1)_3$ and $(Q')_2$ is $(R^1)_2$.
48. Compound of Claim 47 wherein $R^1$ is methyl.
49. Compound of any one of Claims 45 to 48 wherein $R^2$ is H or methyl.
50. Compound of any one of Claims 45 to 49 wherein $R^3$ is H, methyl or diphenylhexyl.
51. Compound of any one of Claims 45 to 50 wherein $R^8$ (in $X^3$) is $-CH_2CH_2-$.

European Patent Office

# EUROPEAN SEARCH REPORT

Application Number

EP 87 30 8546

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| D,A | EP-A-0 068 887 (DU PONT)<br>--- | | C 08 F 4/42<br>C 08 F 4/72 |
| D,A | EP-A-0 145 263 (DU PONT)<br>----- | | |
| | | | TECHNICAL FIELDS SEARCHED (Int. Cl.4) |
| | | | C 08 F |

The present search report has been drawn up for all claims

| Place of search | Date of completion of the search | Examiner |
|---|---|---|
| THE HAGUE | 08-01-1988 | CAUWENBERG C.L.M. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document